# EUROPEAN PATENT APPLICATION

(11) **EP 0 773 453 A1**
(43) Date of publication of application: **14.05.1997**
(21) Application number: 96117665.8
(22) Date of filing: 05.11.1996
(51) Int. Cl.: G01S 17/93

(54) **An optical remote detection, anticollision system for vehicles**

(30) Priority: 07.11.1995 IT TO950896
(71) Applicant: MAGNETI MARELLI S.p.A., 20145 Milano (IT); REGIE NATIONALE DES USINES RENAULT S.A., 92109 Boulogne Billancourt (FR)
(72) Inventor: Giolitti, Riccardo, 10015 Ivrea (Torino) (IT)
(74) Representative: Quinterno, Giuseppe

(57) **Abstract**

An infra-red laser-light remote detection system (TX, RX, ECU) for use as an anti-collision system in motor vehicles, of the pulse type with measurement of the transit time (DO) is configured in a manner such that the discrimination sensitivity for the detection of obstacles is reduced when fog is present so as to prevent the generation of false alarm signals.

## Description

The present invention relates in general to laser optical remote detection systems used in vehicles for anti-collision purposes. More specifically, the present invention relates to a system of this type which can operate in fog.

Remote detection systems using a laser beam, typically an infra-red laser, for installation in motor vehicles for anti-collision purposes are known in the art. These systems detect the presence of any obstacles, for example other vehicles disposed in front of the vehicle in which they are fitted, and indicate their presence to the driver of the vehicle who might not be aware of the danger thereof because of poor visibility or of a distraction.

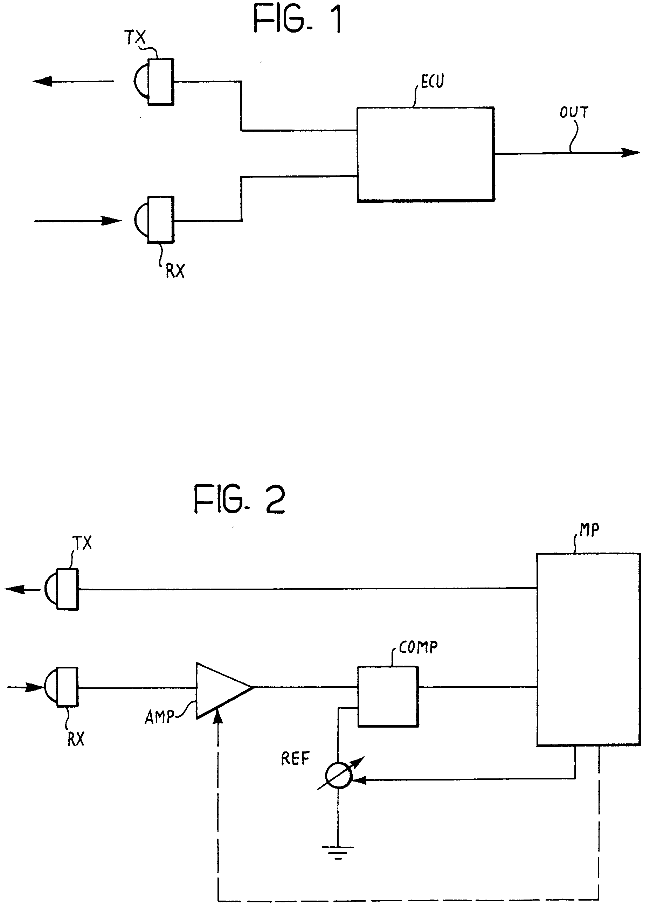

Typically, these systems measure the transit time in order to determine the range of any obstacles detected. For a better understanding, the operation of a system of this type will now be described with reference to Figure 1.

A laser remote detection system comprises a laser emitter TX which can emit a laser beam at an infrared frequency and an electro-optical detector RX for detecting light radiation at the frequency emitted by the emitter TX. Both the emitter TX and the detector RX are connected to an electronic control unit ECU. The control unit ECU controls the emission of the laser beam by the emitter TX and receives input signals generated by the electro-optical detector RX which it processes in order to determine the presence and location of any obstacles in front of the vehicle.

Naturally, the control unit ECU provides an output OUT which is used by display means (not shown) to display data relating to any obstacles processed by the control unit ECU to the driver of the vehicle.

Typically, the laser emitter TX is controlled so as to emit light pulses periodically. If there is an obstacle in front of the vehicle, this reflects some of the radiation of the light pulses which is then received by the detector RX in the form of echoes. The delay between the time at which the pulse is emitted and the receipt of these echoes is directly proportional to the range of the obstacles which generated the echoes. If the time elapsed between the emission of a pulse and the receipt of an echo, known as the transit time, is known the range of the obstacle which generated the echo can thus be deduced, since the speed of light is known.

Moreover, some systems scan in, for example, a horizontal plane, that is, they send out a series of pulses in different directions so as to scan an area in front of the vehicle. This detection technique is substantially similar to that of a Radar system and these systems are in fact often called OPDAR or optical radar systems.

However, these systems have disadvantages in fog. The water droplets of which the fog is composed in fact reflect the infrared laser light as if they were an obstacle. The system may consequently indicate the presence of false obstacle, generating a false alarm, or an actual obstacle may be hidden by the false obstacle constituted by the fog.

The object of the present invention is to provide an anti-collision optical remote detection, anti-collision system which solves all of the problems indicated above in a satisfactory manner.

According to the present invention, this object is achieved by virtue of an optical remote detection anti-collision system having the characteristics indicated in the claims which follow the present description.

Further advantages and characteristics of the present invention will become clear from the following detailed description, given with the aid of the appended drawings, provided by way of non-limiting example, in which:
Figure 1 is a block diagram showing a remote detection system according to the prior art and has already been described,
Figure 2 is a block diagram showing a possible embodiment of a remote detection system according to the present invention,
Figures 3 to 8 are cartesian time graphs showing the operation of a remote detection system according to the present invention.

The present invention consists essentially of a reduction in the obstacle-discrimination sensitivity of the remote detector in fog.

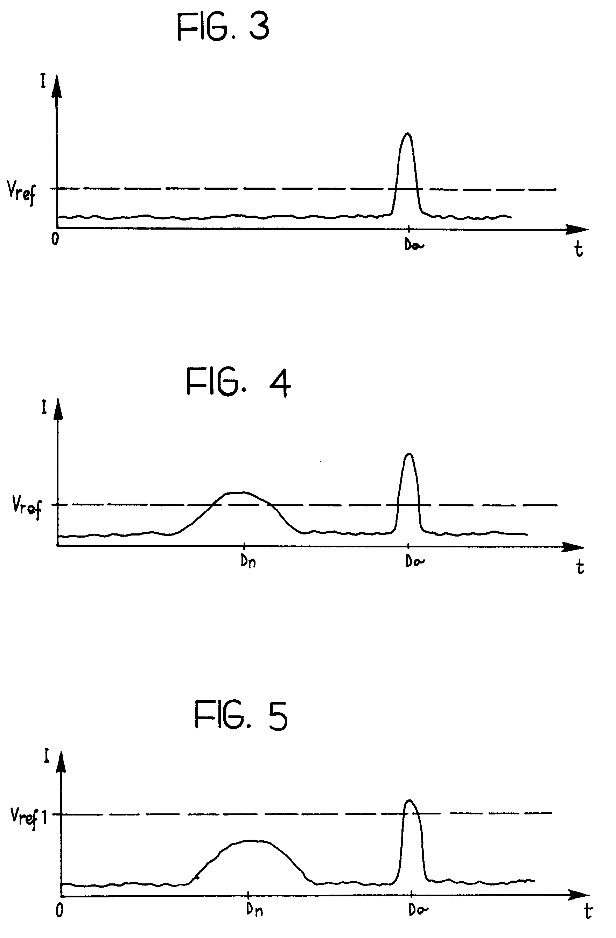

When neither fog nor other agents which interfere with the propagation of the laser beam are present, that is, in normal conditions, the signal generated by the detector RX receiving the radiation which has been emitted by the emitter TX and has been reflected enables the presence of any obstacles disposed in front of the vehicle to be distinguished clearly. Figure 3 shows, by way of example, the curve of the intensity I of the signal generated by the detector RX and proportional to the intensity of the radiation received by the detector RX, against time t. If there is an obstacle in front of the vehicle, this signal has a very distinct peak which identifies the presence of the obstacle. The intensity of this peak is clearly greater than the background noise received by the detector RX and the peak is received at a time Do. The time interval elapsing between the emission of the pulse, time 0 in the drawing, and the time Do is the transit time and enables the range of the obstacle which generated the peak at the time Do to be determined.

The detection or discrimination of an obstacle takes place by a comparison of the signal generated by the detector RX with a reference or threshold value Vref. An obstacle is therefore detected when the signal generated by the detector RX exceeds the threshold value Vref. Naturally, the threshold value Vref is of a size such as to permit discrimination between the echoes generated by obstacles and the background noise and any interference.

However, in the presence of fog, this reflects a portion of the light radiation emitted by the emitter TX, generating an echo the intensity of which may even be quite high. Figure 4, which is similar to Figure 3, shows a signal generated by the detector RX in fog. As can be noted, at a time Dn there is an echo produced by the reflection due to the fog. Since the intensity of this echo is greater than the threshold value Vref, it causes a false indication of an obstacle at a range corresponding to the time Dn. The echo due to the fog will therefore generate a false echo and may mask any echo due to an obstacle disposed at a range corresponding to the time Do.

In order to prevent false indications in fog, the remote detection system according to the present invention is configured so as to vary the condition for the discrimination of the echoes received by the detector RX. This can be done by modification of the threshold value Vref so as to increase it. This situation is shown in Figure 5, in which it can be seen that the system uses an increased threshold value Vref1. This increased threshold value Vref1 prevents the generation of false signals due to the echoes produced by fog whilst allowing the echoes produced by actual obstacles to be detected.

A diagram of a remote detection system which can perform this function will now be described with reference to Figure 2. As can be noted in the diagram of Figure 2, which is similar to that of Figure 1, an amplifier AMP and a comparator COMP are interposed between the electro-optical detector RX and a microprocessor MP constituting the processing unit of the control unit ECU. The amplifier AMP has the function of amplifying the typically weak signal generated by the detector RX. The comparator COMP, on the other hand, has the function of comparing the signal received from the amplifier AMP with the threshold value Vref or Vref1 for the discrimination of echoes received by the detector RX.

The threshold value used by the comparator COMP is generated by a threshold-value generator circuit REF. This threshold-value generator circuit REF is controlled by the microprocessor MP which increases the threshold value generated by the circuit REF when fog is present, as described above.

Naturally, the remote detection system has to be aware of the presence of fog in order to be able to carry out this operation. The presence of fog can be communicated to the remote detection system manually, for example, by means of a switch or the like by the driver of the vehicle, or may be detected automatically by the system.

In the case of a scanning system, for example, it is possible to detect fog since it generates echoes in all of the directions in which the laser beam is emitted. Moreover, these echoes are typically emitted at a close range. The spatial extent of obstacles detected, on the other hand, typically, is limited. The system can therefore be configured so as to recognize a fog condition when echoes are received from all of the directions in which the laser beam is emitted in the course of one or more successive scans.

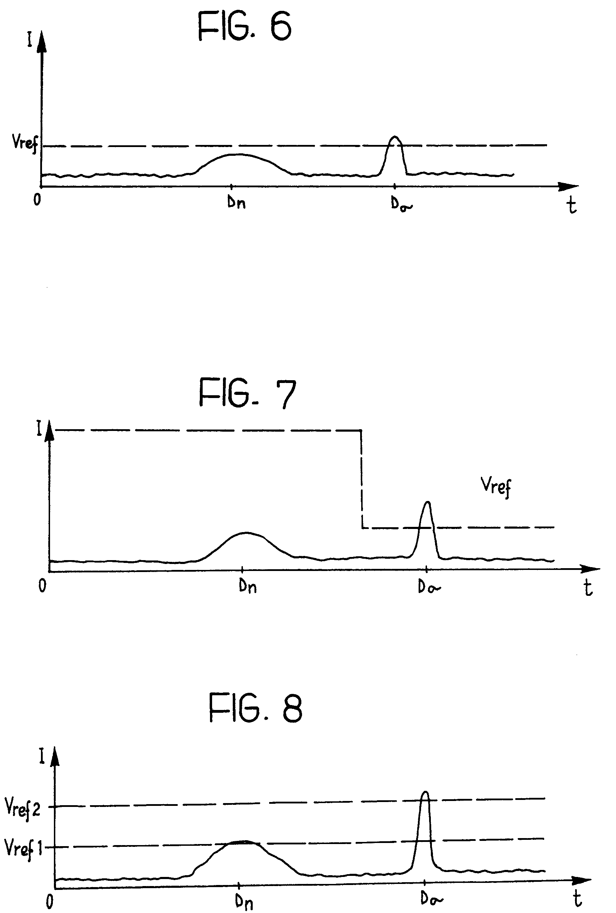

Alternatively, the echo-discrimination condition may be varied by means of the signal emitted by the detector RX rather than by means of the threshold value Vref. In fact, the amplification factor for the signal generated by the detector RX can be reduced so as correspondingly to reduce the intensity of the echoes received. This situation is shown, for example, in Figure 6. In this case, the microprocessor MP acts on the amplifier AMP by varying its amplification factor, rather than acting on the circuit REF.

It is also possible to provide for short-range signals, that is, signals within the range in which reflection due to the fog takes place, to be excluded or prevented when fog is present.

This strategy for reducing short-range sensitivity can also be used if there is dirt on the lenses of the emitter TX and of the detector RX. When dirt is present, some of the laser light emitted by the emitter TX may in fact be reflected towards the detector RX by the lenses themselves as if an obstacle were present. Naturally, the reduction of the sensitivity of the system at short range eliminates this problem.

This strategy can be implemented, for example by variation of the threshold value Vref over time. A situation of this type is illustrated, by way of example, in Figure 7. As can be seen, for a first time interval corresponding to a close range in which the receipt of echoes due to fog may occur, the threshold value Vref has a very high level so as to prevent the detection of obstacles. However, the threshold value Vref subsequently adopts a normal level such as to allow obstacles to be detected. The curve of the threshold value Vref may also differ from that shown, for example, it may be a gradual curve, or may have a ramp instead of a step.

Alternatively, the detection or the indication of obstacles may be excluded or prevented completely for this first time interval corresponding to close ranges. This can be done by corresponding configuration or programming of the control unit ECU.

Alternatively, the discrimination of obstacles may also permanently be carried out with normal sensitivity for a part of the light pulses emitted and with reduced sensitivity for the remaining part of the light Pulses. In fog, only the signals generated by reduced-sensitivity discrimination are output.

A further alternative embodiment of the present invention also provides for the generation and use of two threshold values. This situation is shown in Figure 8, in which a first threshold value Vref1 and a second threshold value Vref2 having a higher level than the first value Vref1 can be seen. The use of two threshold values Vref1, Vref2 enables the control unit ECU to have more information relating to the echoes detected. In this embodiment, the control unit ECU therefore detects echoes of two types: weak echoes which exceed the first threshold value Vref1 and strong echoes which also exceed the second threshold value Vref2.

When there is fog, for example, only the echoes which also exceed the second threshold value Vref2, that is, the stronger echoes, may be indicated as obstacles.

It is intended that the processing of the signal generated by the detector RX may be effected within the microprocessor MP either by wholly analog processing or by wholly or partially digital processing, by techniques and methods well known to an expert in the art.

Naturally, the principle of the invention remaining the same, the details of construction and forms of embodiment may be varied widely with respect to those described and illustrated, without thereby departing from the scope of the present invention.

## Claims

1. A laser remote detection system for use in a vehicle for anti-collision purposes, comprising:
- laser emitter means (TX) for emitting light pulses,
- electro-optical detector means (RX) which can generate a signal (I) proportional to the light radiation received,
- processing means (ECU) operatively connected to the emitter means (TX) and to the detector means (RX) and configured so as to compare the signal (I) which is proportional to the light radiation received and is generated by the detector means (RX) with a threshold value (Vref) and to output a signal (OUT) if the signal (I) exceeds the threshold value (Vref),
characterized in that the system is configured so as to reduce the ratio between the signal (I) and the threshold value (Vref) in order to reduce the sensitivity of the detection of obstacles when fog is present.

2. A system according to Claim 1, characterized in that it is configured to use an increased threshold value (Vref1) when fog is present.

3. A system according to Claim 1, characterized in that it is configured to reduce the amplitude of the signal (I) which is proportional to the light radiation received and is generated by the detector means (RX), when fog is present.

4. A system according to Claim 2 or Claim 3, characterized in that the system is configured to emit light pulses and to measure the transit time elapsed between the emission of a pulse and the receipt of a light echo such as to cause the receiver means (RX) to generate a signal (I) greater than the threshold value (Vref, Vref1).

5. A system according to Claim 4, characterized in that the system is configured so as to reduce the ratio between the signal (I) and the threshold value (Vref) for a predetermined time interval corresponding to a close range following the emission of a light pulse, when fog is present.

6. A system according to Claim 4, characterized in that the system is configured so as to prevent the detection and/or the indication of obstacles for a predetermined time interval corresponding to a close range following the emission of a light pulse, when fog is present.

7. A system according to any one of Claims 1 to 6, characterized in that it comprises control means by means which the driver of the vehicle can communicate the presence of fog to the system.

8. A system according to any one of Claims 1 to 7, characterized in that it is configured so as to emit the light pulses in a plurality of different directions so as to scan an area in front of the vehicle.

9. A system according to Claim 8, characterized in that it is configured so as to detect the presence of fog if it receives light echoes indicative of an obstacle in each of the various directions.

10. A system according to Claim 9, characterized in that it is configured so as to detect the presence of fog if the light echoes are indicative of an obstacle at short range.

11. A system according to any one of Claims 4 to 10, characterized in that it is configured so as to reduce the ratio between the signal (I) and the threshold value (Vref) for a first part of the light pulses and to output (OUT) only signals brought about by the first part of the light pulses when fog is present.

12. A system according to any one of Claims 1 to 11, characterized in that it is configured to compare the signal (I) which is proportional to the light radiation received and is generated by the detector means (RX) with a first threshold value (Vref1) and with a second threshold value(Vref2), the second threshold value having a level greater than the first threshold value (Vref1).

13. A system according to Claim 12, characterized in that it is configured to output (OUT) a signal only if the signal (I) exceeds the second threshold value (Vref2) when fog is present.

14. A system according to any one of Claims 1 to 13, characterized in that the emitter means (TX) comprise an infra-red laser.
